# EUROPEAN PATENT APPLICATION

(11) **EP 1 055 693 A1**
(43) Date of publication of application: **29.11.2000**
(21) Application number: 99201658.4
(22) Date of filing: 26.05.1999
(51) Int. Cl.: C08G 18/62, C09D 133/14, C08F 220/26

(54) **Curable coating composition**

(71) Applicant: SHELL INTERNATIONALE RESEARCH MAATSCHAPPIJ B.V., 2596 HR Den Haag (NL)
(72) Inventor: Slinckx, Martine Madeleine Christiane Pierre, 1348 Ottignies, Louvain-La-Neuve (BE); Krebs, Achim, 1348 Ottignies, Louvain-La-Neuve (BE); Uyterhoeven, Griet, 1348 Ottignies, Louvain-La-Neuve (BE)

(57) **Abstract**

Curable coating two pack composition, comprising:
(a) a polymer of the reaction product of a monoglycidyl ester of an α-branched carboxylic acid, containing from 5 to 15 carbon atoms in the acid moiety, and preferably from 9 to 11 carbon atoms, and an acrylic acid which is optionally α-substituted with an alkyl group having from 1 to 4 carbon atoms and preferably 1 carbon atom, if any, in substantially equimolar amounts, said reaction product optionally mixed with a comonomer in minor proportions (less than 50 %wt relative to the total mass of comonomers), the polymer having an Mw up to 30,000;
(b) a derivative of an apolar polyisocyanate as curing agent, preferably a derivative from isophorone diisocyanate;
formed articles coated with said curable coating compositions before and after curing.

## Description

The invention relates to curable coating composition useful in polymer industry and in particular to coating for automotive,furniture and other shaped poly(alkylene) polymer articles. More in particular the invention relates to a two pack curable primer coating composition useful for polymeric application and especially a primer coating composition for automobile parts and more specifically bumpers, derived mainly from poly(alkylene).

The until now proposed coating compositions for automotive bumpers prepared from poly(propylene) had as disadvantage that they either did not show a sufficient adhesion to the surface of polypropylene supports, which adhesion only could be improved by a pretreatment of said support surface, generally known to persons skilled in the art as corono-discharging or flame treating, or they had been derived from halogenated and more in particular chlorinated polyolefin (CPO) solutions.

For the use of said CPO solutions, moreover the applied poly(propylene) support layers to be coated, had to be modified by incorporation of a significant amount of elastomeric modifier, in order to enable a curing at temperatures of up to 120 °C.

It will be appreciated that due to a heavy pressure of environmental and health authorities and organizations the use of halogen (in particular chlorine) containing coatings and the flaming of poly(propylene) has to be avoided in the near future.

Therefore, there is a growing need for halogen-free coating compositions which have relatively low VOC and relatively high solid resin content, which can be cured at relatively low temperatures (lower than 100 °C) and which moreover show an acceptable adhesion to the poly(propylene) surface.

Therefore it is an object of the present invention to provide said curable halogen free coating compositions aimed at. Another object of the present invention is to provide cured coating films well adhering to a non-pretreated polyalkylene and in particular polypropylene surface.

As a result of extensive research and experimentation said curable coating compositions aimed at could surprisingly be found.

Accordingly the present invention relates to curable halogen-free coating composition, comprising:
(a) a polymer of the reaction product of a monoglycidyl ester of an α-branched carboxylic acid, containing from 5 to 15 carbon atoms in the acid moiety, and preferably from 9 to 11 carbon atoms, and an acrylic acid which is optionally α-substituted with an alkyl group having from 1 to 4 carbon atoms and preferably 1 carbon atom, if any, in substantially equimolar amounts, said reaction product optionally mixed with a comonomer in minor proportions (less than 50 %wt relative to the total mass of comonomers), the polymer having an Mw up to 30,000 and preferably up to 10,000;
(b) a derivative of an apolar polyisocyanate as curing agent.

The optionally included comonomer, possibly used in amounts of up to 50% by weight, relative to the total weight of comonomers, if any, may be selected from alkyl acrylate esters, cycloalkyl acrylate esters, hydroxy-functional alkyl acrylate esters, in relatively low proportions (< 10 %wt) and/or vinyl esters of α-branched carboxylic acids having from 5 to 15 carbon atoms and preferably from 9 to 11 carbon atoms in the acid moiety such as VERSATIC acids in relatively higher proportions (up to 50 %wt) (VERSATIC is a trade mark).

Commercially available examples of such comonomers are VEOVA 9, VEOVA 10 or VEOVA 11 vinyl esters or EXXAR vinyl esters (VEOVA and EXXAR are trade marks).

Comonomers may be selected from aliphatic (meth)acrylate, cycloaliphatic (meth)acrylate and alkyl substituted aromatic vinyl monomers.

More preferably are used as comonomers alkyl substituted cycloaliphatic (meth)acrylates, having at least 9 carbon atoms and preferably from 9 to 12 and alkyl substituted aromatic vinyl, or combinations thereof.

The preferred component (a) is formed by a homopolymer of the reaction product of equimolar amounts of a monoglycidyl ester of an α-branched carboxylic acid, containing 10 carbon atoms in the acid moiety, such as CARDURA E10 or GLYDEXX glycidyl ester, and acrylic acid (CARDURA and GLYDEXX are trade marks).

With the term "substantially equimolar amounts", as used throughout the present specification, are meant molar ratios between monoglycidyl ester and acrylic acid which will be in the range of from 0.95:1 to 1.05:1 and preferably as close as possible to 1:1.

The preferred component (b) is formed by polyisocyanates useful coating compositions, i.e. compounds known from US patent No. 4,322,508 and US patent No. 4,965,317.

Said polyisocyanates have 2 or more and preferably 3 or more, reactive isocyanate groups per molecule, and have an apolar structure.

The polyisocyanate curing or cross-linking agents are included in the coating compositions of the present invention in an amount sufficient to provide between 0.5 and 1.6 preferably between 0.8 and 1.3 and more preferably between 0.9 and 1.1 reactive isocyanate groups per hydroxy group in the composition.

Generally, polyisocyanates have been well known in the art for a long time and numerous suitable isocyanates having 2 or more reactive isocyanate groups per molecule were proposed.

Among the many suitable polyisocyanates proposed for the use in automotive coatings are aliphatic, cycloaliphatic and aromatic polyisocyanate compounds.

It has surprisingly been found that only the derivatives of cycloaliphatic polyisocyanate compounds having an apolar molecular structure, could be successfully applied, whereas e.g. the use of straight aliphatic polyisocyanates, i.e. without branching in the carbon chain, such isocyanurate of hexamethylene diisocyanate (DSI) did not provide the required adhesion (e.g. DESMODUR N 3390) (DESMODUR is a trade mark).

A preferred group of polyisocyanates, the derivatives of which can be used as component (b), can be represented by the formulae: 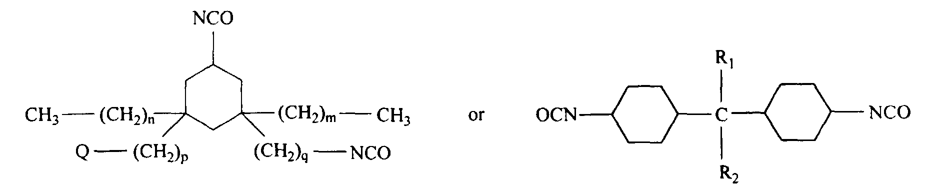 wherein Q represents a CH₃ or ―O―C―N group and wherein m, n, p and q each independently has a value of from 0, 1, 2 or 3 and preferably 0 or 1, wherein R₁ and R₂ independently represent alkyl, having from 1 to 4 carbon atoms, cyclohexyl or cyclohexyl alkyl having from 7 to 10 carbon atoms.

More preferably the curing agent (b) is derived from isophorone diisocyanate such as polyfunctional isocyanurate ring containing polyisocyanates, or compatible mixtures thereof, such as DESMODUR VPLS 2104.

The (co)polymer component (a) can be prepared by methods known in principle to persons skilled in this art, e.g. as known from US patent 4,332,508, i.e. by reaction of the monoglycidyl ester of an α-branched carboxylic acid, containing from 5 to 15 carbon atoms, and preferably from 9 to 11 carbon atoms, and an acrylic acid which is optionally α-substituted with an alkyl group having from 1 to 4 carbon atoms and preferably 1 carbon atom, if any, in organic solvent medium, and polymerization of said monomer formed, optionally mixed with a minor amount of selected comonomers by means of known initiators.

Suitable initiators are providing free radical initiated polymerization, in such proportions as to obtain the polymers desired.

A large number of free radical initiators are known in the art and are suitable for this purpose. These include: benzoyl peroxide; lauryl peroxide; t-butyl-hydroxy peroxide; di-tert.butyl peroxide; acetyl cyclohexane sulfonyl peroxide; diisobutyryl peroxide; di(2-ethylhexyl) peroxy dicarbonate; diisopropyl peroxy dicarbonate; t-butyl peroxy pivalate, decanoyl peroxide; azobis(2-methyl-propionitrile); t-butyl perbenzoate; t-butyl peroctoate; cumene hydroperoxide, and the like.

Polymerization is preferably carried out in solution of a solvent, in which the hydroxy functional polymer or copolymer is soluble.

Suitable examples of such solvents are toluene and xylene.

However, also waterborne coating compositions can be obtained, the formed film obtained from which shows an excellent adhesion to a polypropylene surface, and which form another aspect of the present invention too.

They can be prepared by methods in principle known in the art, i.e. polymerization of the monomer, obtainable by a separate reaction of the monoglycidyl ester of an α-branched carboxylic acid, containing from 5 to 15 carbon atoms in the acid moiety, and an acrylic acid, which is optionally α-substituted with an alkyl group having 1 to 4 carbon atoms and preferably 1 carbon atom, if any, optionally mixed with one or more comonomer, in an aqueous emulsion optionally containing a stabilizing comonomer and optionally a surfactant and/or a protective colloid and the hereinbefore specified initiator.

Optional comonomers can be used in a proportion of less than 50 %wt, relative to the weight of total monomer, the proportion being dependent on the type of comonomer involved. In case of the use of comonomers selected from alkyl acrylate esters, cycloalkyl acrylate esters, hydroxyfunctional acrylate esters, the proportion is < 10 %wt, and in case of more preferred vinyl esters of α,α-branched acids in proportion of less than 50 %wt.

It will be appreciated that this preferred stabilizing comonomer is more preferably the same as that one, used during the initial preparation of the main monomer by using starting amount of acrylic acid, which is slightly more than the exact equimolar amount.

It will be appreciated that the hereinbefore specified coating composition may optionally contain one or more additional ingredients, including curing catalysts or accelerators such as dibutyltin dilaurate, pigments, pearlescent flakes, fillers, inclusive conductive fillers, plasticizers, antioxidants, surfactants and flow control agents, if desired.

The coating composition can be applied by conventional techniques such as spraying, electrostatic spraying, dipping, brushing, flowcoating and roller coating. The preferred technique is spraying or roller coating.

It will be appreciated that another aspect of the present invention is formed by the curable primer coating compositions applied on a polyalkylene and in particular polypropylene substrate, and more preferably non-flamed or treated or corona-discharged polyalkylene substrates in the form of shaped articles e.g. automotive bumpers.

Still another aspect of the present invention is formed by the cured coating compositions on the hereinbefore specified substrates, on which optionally may have been applied one or more further coating layers, i.e. the cured adhering coating layer then acts as a primer layer.

It will be appreciated that a significant advantage of the present curable coating compositions is formed by the possibility of their curing at lower temperatures, i.e. up to 80 °C instead of the formerly applied curing temperature of 120 °C and that after curing an excellent adhesion is obtained, and without using halogen-containing ingredients.

Moreover, the coating compositions can be successfully applied on non-flamed or non-corona-discharged polyalkylene polymer substrates, which causes significant costs savings.

The curable coating compositions are preferably stored and supplied as a so-called two-pack system comprising the components a) and b) respectively, which are mixed together shortly before application on the selected substrate.

The present invention is illustrated by the following examples, however without restricting its scope to these specific embodiments.

### Example 1

Xylene was heated until 140 °C in a 2 litre reactor equipped with thermocouple, reflux condensor, anchor stirrer and nitrogen purge.

At 140 °C 150 g of a previously prepared reaction product of equimolar amounts of CARDURA glycidyl ester and acrylic acid and dissolved in 10 g xylene and containing also 2 %wt di-tert.butyl peroxide (DTBP) was added with a pump during two hours with a dosing flow of 24 ml/min.

Thereafter a post reaction was performed after addition of 0.5 %wt DTBP, giving a polymer having a Mw between 4,000 and 6,000.

### Example 2

50 g resin of the polymer as prepared in Example 1 in a 60 %wt solids in solution in xylene;
21.3 g DESMODUR VPLS 2104;
0.62 g dibutyltin dilaurate solution in butylacetate (0.5 %wt solution) were mixed together and xylene was added to adjust a suitable application viscosity of about 80 mP.sec.

The obtained mixture was applied by bar coating on non-flamed poly(propylene) polymer car bumper grade in a film thickness dry 10µ.

The panels were allowed to flash at room temperature during 10 minutes and subsequently cured during 30 minutes at 80 °C and at room temperature during 12 hours respectively.

The adhesion of the coating film was tested according to ASTM 3359 one hour after the curing.

Excellent adhesion was found in both curing methods.

### Comparative Example

40 g of the polymer as prepared in Example 1 in a 60 %wt solids in solution in xylene; 17.2 g DESMODUR N3390; 0.5 g dibutyltin dilaurate solution in butylacetate (0.5 %wt solution), were mixed together.

Xylene was added to adjust a suitable application viscosity of about 80 mP.sec.

The obtained mixture was applied by bar coating on non-flamed poly(propylene) polymer car bumper grade in a film thickness dry 10µ.

The panels were allowed to flash at room temperature during 10 minutes and subsequently cured during 30 minutes at 80 °C and at room temperature during 12 hours respectively.

The adhesion of the coating film was tested according to ASTM 3359 one hour after the curing.

No adhesion was found in both cases.

## Claims

1. Curable coating two pack composition, comprising:
(a) a polymer of the reaction product of a monoglycidyl ester of an α-branched carboxylic acid, containing from 5 to 15 carbon atoms in the acid moiety, and preferably from 9 to 11 carbon atoms, and an acrylic acid which is optionally α-substituted with an alkyl group having from 1 to 4 carbon atoms and preferably 1 carbon atom, if any, in substantially equimolar amounts, said reaction product optionally mixed with a comonomer in minor proportions (less than 50 %wt relative to the total mass of comonomers), the polymer having an Mw up to 30,000;
(b) a derivative of an apolar polyisocyanate as curing agent.

2. Curable coating composition ready for use, comprising:
(a) a polymer of the reaction product of a monoglycidyl ester of an α-branched carboxylic acid, containing from 5 to 15 carbon atoms in the acid moiety, and preferably from 9 to 11 carbon atoms, and an acrylic acid which is optionally α-substituted with an alkyl group having from 1 to 4 carbon atoms and preferably 1 carbon atom, if any, in substantially equimolar amounts, said reaction product optionally mixed with a comonomer in minor proportions (less than 50 %wt relative to the total mass of comonomers), the polymer having an Mw up to 30,000;
(b) a derivative of an apolar polyisocyanate as curing agent.

3. Curable coating composition according to claims 1 and 2, wherein component (b) is derived from isophorone diisocyanate.

4. Curable coating composition according to claims 1-3, wherein component (a) is derived from one or more additional comonomers, selected from vinyl esters of α-branched carboxylic acids having from 9 to 11 carbon atoms in a proportion of less than 50 %wt.

5. Curable coating composition according to claims 1-3, wherein component (a) is derived from one or more additional comonomers, selected from alkyl acrylate esters, cycloalkyl acrylate esters, hydroxyfunctional alkyl acrylate esters, in a proportion of less than 10 %wt.

6. Curable coating composition according to claim 2, applied on a poly(alkylene) polymer substrate.

7. Curable coating composition according to claim 6, applied on a poly(propylene) polymer substrate.

8. Curable coating composition according to claims 6 and 7, applied on non-flamed poly(alkylene) polymer substrate.

9. Cured coating composition on shaped poly(alkylene) polymer substrate, characterized in that a curable coating composition of claims 6-8 is cured at 80 °C, the cured primer coating optionally being covered with one or more additional coating layers.
